# EUROPEAN PATENT APPLICATION

(11) **EP 4 765 558 A1**
(43) Date of publication of application: **24.06.2026**
(21) Application number: 24881205.9
(22) Date of filing: 15.08.2024
(51) Int. Cl.: H02J 7/00, H04B 5/26, H01R 13/66, H01R 13/703, H02J 50/10

(54) **ELECTRONIC DEVICE, CONTROL METHOD, AND RELATED APPARATUS**

(30) Priority: 23.10.2023 CN 202311378996
(71) Applicant: Honor Device Co., Ltd., Shenzhen, Guangdong 518040 (CN)
(72) Inventor: ZHANG, Chao, Shenzhen, Guangdong 518040 (CN)
(74) Representative: Epping - Hermann - Fischer
(86) International application number: PCT/CN2024/112314
(87) International publication number: WO 2025/086837

(57) **Abstract**

Embodiments of this application relate to the technical field of terminals, and provide an electronic device, a control method, and a related apparatus. The electronic device includes a wired interface, a coil unit, a first switch unit, a first charging unit, and a second charging unit. The wired interface is respectively electrically connected to the first charging unit and the second charging unit. The first switch unit is connected between the wired interface and the second charging unit. An end of the coil unit is connected between the first switch unit and the second charging unit. When the electronic device simultaneously performs wired reverse charging and wireless charging, the first switch unit is in an off state, no path exists between the wired interface and the coil unit, the electronic device performs the wired reverse charging through the first charging unit and the wired interface, and the electronic device performs the wireless charging through the coil unit and the second charging unit. In this way, an entire circuit is relatively simple and isolation between a link for wired reverse charging and a link for wireless charging can be implemented without a need of a plurality of switch units.

## Description

This application claims priority to Chinese Patent Application No. 202311378996.5, filed with the China National Intellectual Property Administration on October 23, 2023 and entitled "ELECTRONIC DEVICE, CONTROL METHOD, AND RELATED APPARATUS", which is incorporated herein by reference in its entirety.

### TECHNICAL FIELD

This application relates to the technical field of terminals, and in particular, to an electronic device, a control method, and a related apparatus.

### BACKGROUND

An On-The-Go (On-The-Go, OTG) technology is a technology for implementing data transmission between devices without the participation of a host (host). An electronic device supporting OTG may be referred to as an OTG device. Some electronic devices have a wireless reverse charging function and a wired OTG function. In some implementations, the electronic device may perform wireless charging on a connected external device. In other words, wireless reverse charging is implemented. The electronic device may further provide wired charging to the connected device or communicate with the connected OTG device. In other words, wired reverse charging or wired OTG is implemented.

However, the electronic device having the wireless reverse charging function and the wired OTG function has a relatively complex circuit.

### SUMMARY

Embodiments of this application relate to the technical field of terminals, and provide an electronic device, a control method, and a related apparatus. In a circuit of the electronic device, a wired link of the electronic device may be formed by a Type-C interface and one charging unit, and a wireless link of the electronic device may be formed by a coil unit and another charging unit. A switch unit is connected between the wired link and the wireless link. When the wired link and the wireless link are simultaneously used, the wired link may be isolated from the wireless link by controlling the switch unit to be in an off state. An entire circuit is relatively simple, and isolation between the wired link and the wireless link may be implemented without a plurality of switch units.

According to a first aspect, an embodiment of this application provides an electronic device, having a wired reverse charging function and a wireless charging function, including: a wired interface, a coil unit, a first switch unit, a first charging unit, and a second charging unit. The wired interface is respectively electrically connected to the first charging unit and the second charging unit. The first switch unit is connected between the wired interface and the second charging unit. An end of the coil unit is connected between the first switch unit and the second charging unit. When the electronic device simultaneously performs wired reverse charging and wireless charging, the first switch unit is in an off state, no path exists between the wired interface and the coil unit, the electronic device performs the wired reverse charging through the first charging unit and the wired interface, and the electronic device performs the wireless charging through the coil unit and the second charging unit.

In this way, the first charging unit and the wired interface form a wired link used for the wired reverse charging, and the coil unit and the second charging unit form a wireless link used for the wireless charging. When the electronic device simultaneously performs the wired reverse charging and the wireless charging, the isolation between the wired link and the wireless link can be implemented by controlling the first switch unit to be in the off state, thereby reducing a probability of the wired reverse charging being interfered with by the wireless link, and reducing a probability of the wireless charging being interfered with by the wired link. The wired interface may be a Type-C interface 201 in the embodiment, the coil unit may be a coil unit 304 in the embodiment, the first switch unit may be a first switch unit 301 in the embodiment, the first charging unit may be a first charging unit 302 in the embodiment, and the second charging unit may be a second charging unit 303 in the embodiment.

In a possible implementation, the first switch unit includes a first field effect transistor and a second field effect transistor. A source terminal of the first field effect transistor is connected to the wired interface, a drain terminal of the first field effect transistor is connected to a drain terminal of the second field effect transistor, a source terminal of the second field effect transistor is connected to the second charging unit, and the second charging unit is further connected to a control terminal of the first field effect transistor and a control terminal of the second field effect transistor. When the electronic device simultaneously performs wired reverse charging and wireless charging, the first field effect transistor and the second field effect transistor are both in an off state.

In this way, when the electronic device simultaneously performs the wired reverse charging and the wireless charging, that the first field effect transistor and the second field effect transistor are both in an off state indicates that the first switch unit is in the off state, and the isolation between the wired link and the wireless link is implemented. A manner in which the first field effect transistor and the second field effect transistor are connected to each other the drain terminal can reduce a probability of leakage when the first switch unit is in the off state. The first field effect transistor may be a first field effect transistor M1 in the embodiment, and the second field effect transistor may be a second field effect transistor M2 in the embodiment.

In a possible implementation, the first switch unit includes a third field effect transistor, a fourth field effect transistor, and a fifth field effect transistor. The first charging unit is further connected to a control terminal of the third field effect transistor and a control terminal of the fourth field effect transistor, a drain terminal of the fifth field effect transistor is connected to a control terminal of the third field effect transistor and a control terminal of the fourth field effect transistor, and a source terminal of the fifth field effect transistor is grounded. A source terminal of the third field effect transistor is connected to the wired interface, a drain terminal of the third field effect transistor is connected to a drain terminal of the fourth field effect transistor, and a source terminal of the fourth field effect transistor is connected to the second charging unit. Alternatively, the drain terminal of the third field effect transistor is connected to the wired interface, the source terminal of the third field effect transistor is connected to the source terminal of the fourth field effect transistor, the drain terminal of the fourth field effect transistor is connected to the second charging unit, and the first charging unit is further connected to the source terminal of the third field effect transistor and the source terminal of the fourth field effect transistor. When the electronic device simultaneously performs wired reverse charging and wireless charging, the fifth field effect transistor is in an on state, and the third field effect transistor and the fourth field effect transistor are both in an off state.

In this way, the third field effect transistor may be an N-channel field effect transistor that is not high-voltage-tolerant, and the fourth field effect transistor and the fifth field effect transistor may both be N-channel field effect transistors that are high-voltage-tolerant. Because the fourth field effect transistor and the fifth field effect transistor are high-voltage-tolerant, electrostatic protection for the second charging unit can be implemented. The third field effect transistor may be the N-channel field effect transistor that is not high-voltage-tolerant, and has low power consumption and relatively low costs. When the electronic device simultaneously performs wired reverse charging and wireless charging, the fifth field effect transistor is controlled to be in the on state, so that a voltage of the control terminal of the third field effect transistor and a voltage of the control terminal of the fourth field effect transistor are both pulled low, and the third field effect transistor and the fourth field effect transistor are both in the off state, thereby implementing convenience of turning off the third field effect transistor and the fourth field effect transistor. The third field effect transistor may be a third field effect transistor M3 in the embodiment, the fourth field effect transistor may be a fourth field effect transistor M4 in the embodiment, and the fifth field effect transistor may be a fifth field effect transistor M5 in the embodiment.

In a possible implementation, a first resistor is further included. The first resistor is connected between the first charging unit and the control terminal of the third field effect transistor, and the first resistor is further connected between the first charging unit and the control terminal of the fourth field effect transistor.

In this way, when the fifth field effect transistor is in the on state, the first resistor can reduce a probability that the first charging unit is damaged due to that a voltage at an output drive voltage terminal of the first charging unit is pulled down. The first resistor may be a first resistor R1 in the embodiment.

In a possible implementation, a second resistor is further included. The second resistor is connected between the fifth field effect transistor and the control terminal of the third field effect transistor, and the second resistor is further connected between the fifth field effect transistor and the control terminal of the fourth field effect transistor.

In this way, when the fifth field effect transistor is in the off state and the third field effect transistor and the fourth field effect transistor are both in the on state, the second resistor can reduce a probability that a drive voltage outputted by the first charging unit damages the fifth field effect transistor. The second resistor may be a second resistor R2 in the embodiment.

In a possible implementation, when the electronic device communicates with a wired external device and performs wireless charging, the first switch unit is in an off state, no path exists between the wired interface and the coil unit, and the electronic device performs the wireless charging through the coil unit and the second charging unit.

In this way, when the electronic device communicates with a wired external device and performs wireless charging, the first switch unit is in the off state, and no path exists between the wired interface and the coil unit, so that isolation between a communication link between the electronic device and the wired external device and a link for wireless charging of the electronic device is implemented, a probability that quality of communication between the electronic device and the wired external device is reduced, and a probability that wireless charging is affected by communication between the electronic device and the wired external device is reduced.

In a possible implementation, a wired charging function and a wireless reverse charging function are further provided. When the electronic device simultaneously performs wired charging and wireless reverse charging, the first switch unit is in the off state, no path exists between the wired interface and the coil unit, the electronic device performs wired charging through the wired interface and the first charging unit, and the electronic device performs wireless reverse charging through the second charging unit and the coil unit.

In this way, the first charging unit and the wired interface form a wired link used for wired charging, and the coil unit and the second charging unit form a wireless link used for wireless reverse charging. When the electronic device simultaneously performs the wired charging and the wireless reverse charging, isolation between the wired link and the wireless link can be implemented by controlling the first switch unit to be in the off state, thereby reducing a probability of the wired charging being interfered with by the wireless link, and reducing a probability of the wired charging interfered with by the wired link.

In a possible implementation, a wired charging function and a wireless reverse charging function are further provided. When the electronic device performs wired charging but does not perform wireless charging or wireless reverse charging, the first switch unit is in an on state, no path exists between the wired interface and the coil unit, and the electronic device performs the wired charging through the first charging unit and the second charging unit.

In this way, the electronic device can simultaneously perform the wired charging through the first charging unit and the second charging unit, thereby improving charging efficiency of the wired charging.

In a possible implementation, a second switch unit is further included. The second switch unit is connected between an end of the coil unit and the first charging unit. When the electronic device simultaneously performs wired reverse charging and wireless charging, the second switch unit is in an off state.

In this way, when the electronic device simultaneously uses the wired reverse charging and the wireless charging, the electronic device may control the second switch unit to be in the off state, to isolate the wired link from the wireless link when the second switch unit is included. The second switch unit may be a second switch unit 602 in the embodiment.

In a possible implementation, a wired charging function and a wireless reverse charging function are further provided. A third switch unit is further included. The third switch unit is connected between the coil unit and the end. When the electronic device simultaneously performs wired reverse charging and wireless charging, the third switch unit is in an on state. Alternatively, when the electronic device performs wired charging but does not perform wireless charging or wireless reverse charging, the third switch unit is in an off state.

In this way, the third switch unit may implement electrostatic protection for the coil unit. When the electronic device simultaneously performs the wired reverse charging and the wireless charging, the third switch unit is in the on state, to implement the wireless charging. When the electronic device performs wired charging but does not perform wireless charging or wireless reverse charging, the third switch unit is in an off state, which can reduce a probability of leakage through the coil unit and reduce a probability of a reduction in wired charging efficiency. The third switch unit may be a third switch unit 601 in the embodiment.

In a possible implementation, a fourth switch unit is further included. The fourth switch unit is connected between the wired interface and the first charging unit. The fourth switch unit includes a sixth field effect transistor and a seventh field effect transistor. A source terminal of the sixth field effect transistor is connected to the wired interface, a drain terminal of the sixth field effect transistor is connected to a drain terminal of the seventh field effect transistor, a source terminal of the seventh field effect transistor is connected to the first charging unit, and the first charging unit is further connected to a control terminal of the sixth field effect transistor and a control terminal of the seventh field effect transistor. When the electronic device simultaneously performs wired reverse charging and wireless charging, the sixth field effect transistor and the seventh field effect transistor are both in an on state.

In this way, the sixth field effect transistor and the seventh field effect transistor may both be N-channel field effect transistors that are high-voltage-tolerant, to provide electrostatic protection for the first charging unit. A manner in which the sixth field effect transistor and the seventh field effect transistor are connected to each other at the drain terminal can reduce a probability of leakage when the fourth switch unit is in the off state. The fourth switch unit may be a fourth switch unit 701 in the embodiment. The sixth field effect transistor may be a sixth field effect transistor M6 in the embodiment. The seventh field effect transistor may be a seventh field effect transistor M7 in the embodiment.

In a possible implementation, when the electronic device performs wireless charging but does not perform wired reverse charging or wired charging, the first switch unit and the fourth switch unit are both in an off state, the second switch unit and the third switch unit are both in an on state, and the electronic device performs the wireless charging through the first charging unit and the second charging unit.

In this way, the electronic device can simultaneously perform the wireless charging through the first charging unit and the second charging unit, thereby improving the charging efficiency of the wireless charging.

In a possible implementation, the fourth switch unit further includes an eighth field effect transistor and a ninth field effect transistor. A source terminal of the eighth field effect transistor is connected to the wired interface, a drain terminal of the eighth field effect transistor is connected to a drain terminal of the ninth field effect transistor, a source terminal of the ninth field effect transistor is connected to the first charging unit, and the first charging unit is further connected to a control terminal of the eighth field effect transistor and a control terminal of the ninth field effect transistor. When the electronic device simultaneously performs wired reverse charging and wireless charging, the eighth field effect transistor and the ninth field effect transistor are both in an on state.

For the wired link formed by the wired interface, the fourth switch unit, and the first charging unit, a resistance of the wired link when the fourth switch unit includes the sixth field effect transistor, the seventh field effect transistor, the eighth field effect transistor, and the ninth field effect transistor is less than a resistance of the wired link when the fourth switch unit includes the sixth field effect transistor and the seventh field effect transistor. In this way, when the fourth switch unit includes the sixth field effect transistor, the seventh field effect transistor, the eighth field effect transistor, and the ninth field effect transistor, a probability that the charging efficiency is reduced when the electronic device performs the wired charging through the wired link can be reduced. The eighth field effect transistor may be an eighth field effect transistor M8 in the embodiment, and the ninth field effect transistor may be a ninth field effect transistor M9 in the embodiment.

In a possible implementation, a battery unit is further included. The battery unit includes a first battery, and the first battery is respectively connected to the first charging unit and the second charging unit. Alternatively, the battery unit includes a second battery and a third battery. The second battery is respectively connected to the first charging unit and the second charging unit. The third battery is respectively connected to the first charging unit and the second charging unit. In this way, the battery unit includes the first battery, and a volume of the electronic device can be reduced. The battery unit includes the second battery and the third battery, so that capacitance of the electronic device can be improved, and a battery life requirement of the electronic device with relatively large power consumption can be satisfied.

According to a second aspect, an embodiment of this application provides a control method, applied to the electronic device in the first aspect, including:
controlling the first switch unit to be in an off state when the electronic device simultaneously performs wired reverse charging and wireless charging, where no path exists between the wired interface and he coil unit, the electronic device performs the wired charging through the wired interface and the first charging unit, and the electronic device performs the wireless reverse charging through the second charging unit and the coil unit.

In this way, when the electronic device simultaneously performs the wired reverse charging and the wireless charging, the first switch unit is controlled to be in the off state, the isolation between the wired charging link and the wireless reverse charging link can be implemented. The control for link isolation is simple and convenient.

In a possible implementation, the method further includes: controlling the first switch unit to be in an off state when the electronic device communicates with a wired external device and performs wireless charging, where no path exists between the wired interface and the coil unit, and the electronic device performs the wireless charging through the coil unit and the second charging unit. In this way, when the electronic device communicates with the wired external device and performs the wireless charging, the first switch unit is controlled to be in the off state, so that a communication link between the electronic device and the wired external device and a link for wireless charging of the electronic device are isolated from each other, a probability that quality of communication between the electronic device and the wired external device is reduced, and a probability that wireless charging is affected by communication between the electronic device and the wired external device is reduced.

In a possible implementation, the method further includes: controlling the first switch unit to be in an off state when the electronic device simultaneously performs wired charging and wireless reverse charging, where no path exists between the wired interface and he coil unit, the electronic device performs the wired charging through the wired interface and the first charging unit, and the electronic device performs the wireless reverse charging through the second charging unit and the coil unit.

In this way, when the electronic device simultaneously performs the wired charging and the wireless reverse charging, isolation between the wired link and the wireless link can be implemented by controlling the first switch unit to be in the off state, thereby reducing a probability of the wired charging being interfered with by the wireless link, and reducing a probability of the wired charging interfered with by the wired link.

In a possible implementation, the method further includes: controlling the first switch unit to be in an on state when the electronic device performs wired charging but does not perform wireless charging or wireless reverse charging, where no path exists between the wired interface and the coil unit, and the electronic device performs the wired charging through the first charging unit and the second charging unit.

In this way, the electronic device can simultaneously perform the wired charging through the first charging unit and the second charging unit when performing the wired charging but not performing the wireless charging or the wireless reverse charging, thereby improving the charging efficiency of the wired charging.

According to a third aspect, an embodiment of this application provides an electronic device. The electronic device includes a processor and a memory. The memory is configured to store computer-executable instructions. The processor is configured to perform the computer-executable instructions stored in the memory, causing the electronic device to perform the method in the second aspect.

According to a fourth aspect, an embodiment of this application provides a computer-readable storage medium, and a computer program is stored in the computer-readable storage medium. The computer program, when executed by a processor, implements the method according to the second aspect.

According to a fifth aspect, an embodiment of this application provides a computer program product, including a computer program. The computer program, when run, causes a computer to perform the method in the second aspect.

According to a sixth aspect, an embodiment of this application provides a chip. The chip includes a processor, and the processor is configured to invoke a computer program in a memory to perform the method in the second aspect.

It should be understood that the third aspect to the sixth aspect of this application correspond to the technical solutions of the second aspect of this application, and the beneficial effects obtained by various aspects and the corresponding feasible implementations are similar. Details are not described herein again.

### BRIEF DESCRIPTION OF DRAWINGS

FIG. 1 is a schematic diagram of a scenario according to an embodiment of this application;
FIG. 2 is a circuit diagram of an electronic device in a possible implementation;
FIG. 3 is a circuit diagram of an electronic device according to an embodiment of this application;
FIG. 4 is another circuit diagram of an electronic device according to an embodiment of this application;
FIG. 5A is yet another circuit diagram of an electronic device according to an embodiment of this application;
FIG. 5B is yet another circuit diagram of an electronic device according to an embodiment of this application;
FIG. 6 is yet another circuit diagram of an electronic device according to an embodiment of this application;
FIG. 7 is yet another circuit diagram of an electronic device according to an embodiment of this application;
FIG. 8 is yet another circuit diagram of an electronic device according to an embodiment of this application;
FIG. 9 is yet another circuit diagram of an electronic device according to an embodiment of this application;
FIG. 10 is yet another circuit diagram of an electronic device according to an embodiment of this application; and
FIG. 11 is yet another circuit diagram of an electronic device according to an embodiment of this application.

### DESCRIPTION OF EMBODIMENTS

To facilitate clear descriptions of technical solutions of embodiments of this application, some terms and technologies involved in embodiments of this application are briefly described below.

### 1. Electronic device

The electronic device in embodiments of this application may include a handheld device having an image processing function, an on-board device, and the like. For example, some electronic devices are: a mobile phone (mobile phone), a tablet computer, a palmtop computer, a notebook computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an on-board device (such as an on board unit), a wearable device, a terminal device in a 5G network, a terminal device in a future evolved public land mobile network (public land mobile network, PLMN), or the like. This is not limited in this embodiment of this application.

As an example instead of a limitation, in this embodiment of this application, the electronic device may further be a wearable device. The wearable device may also be referred to as a wearable intelligent device, and is a generic term for wearable devices such as hearing aids, glasses, gloves, watches, clothes, and shoes that are developed through wearable technologies for intelligent design of daily wear. The wearable device is a portable device that is directly worn on a human body or integrated into clothes or an accessory of a user. The wearable device is not merely a hardware device, but implements a powerful function through software support, data exchange, and cloud interaction. In a broad sense, the wearable intelligent device includes full-function, large-size, and complete or partial functions that can be implemented without relying on a smartphone, for example, a smartwatch or smart glasses, and that focuses only on a specific type of application function and needs to be used with another device such as a smartphone, such as various smart bands and smart jewelry for physical sign monitoring.

In addition, in this embodiment of this application, the electronic device may further be a terminal device in an internet of things (internet of things, IoT) system. The IoT is an important part of future information technology development, and a main technical feature thereof is that an object is connected to a network through a communication technology, so as to implement an intelligent network of man-machine interconnection and thing-to-thing interconnection.

In this embodiment of this application, the electronic device may also be referred to as a terminal device, a user equipment (user equipment, UE), a mobile station (mobile station, MS), a mobile terminal (mobile terminal, MT), an access terminal, a user unit, a user station, a mobile site, a mobile station, a remote station, a remote terminal, a mobile device, a user terminal, a terminal, a wireless communication device, a user agent, or a user apparatus.

### 2. Wired charging

The wired charging may be understood as that after an electronic device is connected to a charging device through a charging cable, the charging device charges the electronic device. For example, when the electronic device is connected to a wired charger through a wired interface of the electronic device, the wired charger charges the electronic device.

The wired interface may be, for example, a universal serial bus Type-C (universal serial bus Type-C, USB Type-C) interface. The USB Type-C interface is also referred to as a Type-C interface for short.

### 3. Wired reverse charging

The wired reverse charging may be understood as that after an electronic device is connected to a wired external device through a wired interface, the electronic device charges the wired external device. For example, when the electronic device is connected to an OTG device through the wired interface of the electronic device, the electronic device charges the OTG device.

### 4. Wireless charging

The wireless charging may be understood as charging an electronic device through a wireless charging device. For example, the electronic device is placed on a wireless charger, and the wireless charger charges the electronic device.

### 5. Wireless reverse charging

The wireless reverse charging may be understood as charging, by an electronic device, a wireless external device. For example, the wireless external device is placed on the electronic device, and the electronic device charges the wireless external device. The wireless external device may be, for example, a wireless earphone or a smartwatch. The wireless reverse charging may be referred to as wireless reverse charging for short.

### 6. Electrical connection

The electrical connection may be understood as that an electrical path exists between two connected elements.

### 7. Other terms

In embodiments of this application, words such as "in an example" or "for example" represent giving an example, an illustration, or a description. Any embodiment or design solution described as "in an example" or "for example" in this application should not be explained as being more preferred or advantageous than another embodiment or design solution. Exactly, use of the words such as "in an example" or "for example" is intended to present a concept in a specific manner. In embodiments of this application, "at least one" refers to one or more, and "a plurality of" refers to two or more. "And/or" describes an association relationship between associated objects and represents that three relationships may exist. For example, A and/or B may represent the following cases: only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of the items (pieces) of a, b, or c may represent that a, b, c, a-b, a-c, b-c, or a-b-c, where a, b, and c may be one or more.

In embodiments of this application, "when" may be an instantaneous occurrence time of a case, or may be a period of time after occurrence of a case. This is not specifically limited in embodiments of this application. In addition, a display interface provided by embodiments of this application is only an example, and more or less content may further be included in the display interface.

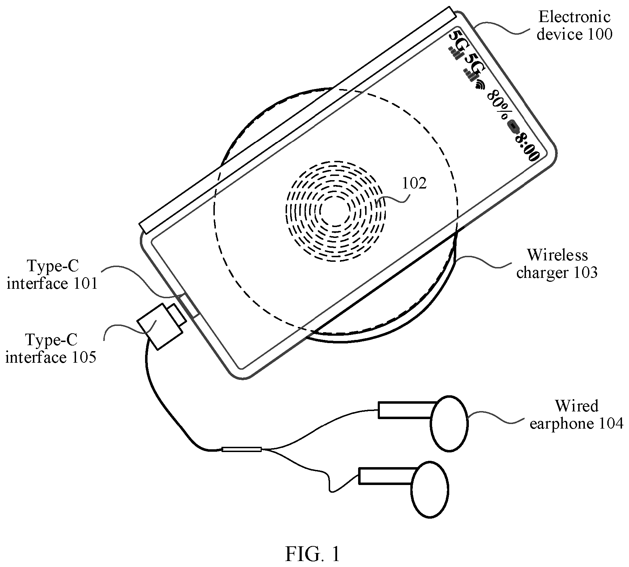

FIG. 1 is a schematic diagram of a scenario according to an embodiment of this application.

As shown in FIG. 1, an electronic device 100 may include a Type-C interface 101 and a coil 102 shown in FIG. 1. The electronic device 100 may be connected to a wired external device such as an OTG device, a wired charger, a wired earphone 104 shown in FIG. 1, or another device through the Type-C interface 101.

The electronic device 100 may be placed on a wireless charger 103. Through electromagnetic induction between the coil 102 of the electronic device 100 and a coil of the wireless charger 103, wireless charging of the electronic device 100 may be implemented. The coil of the wireless charger 103 is not shown in FIG. 1.

Through a connection between the Type-C interface 101 of the electronic device 100 and a Type-C interface 105 of the wired earphones 104, communication between the electronic device 100 and the wired earphone 104 may be implemented. The Type-C interface 105 may be referred to as a Type-C male connector, and the Type-C interface 101 may be referred to as a Type-C female connector.

It should be understood that the electronic device 100 may further be connected to an OTG device through the Type-C interface 101, to implement communication between the electronic device 100 and the OTG device, and/or implement wired reverse charging of the OTG device by the electronic device 100.

Some electronic devices not only have a wireless charging function and a wired reverse charging function, but also have a wired charging function and a wireless reverse charging function.

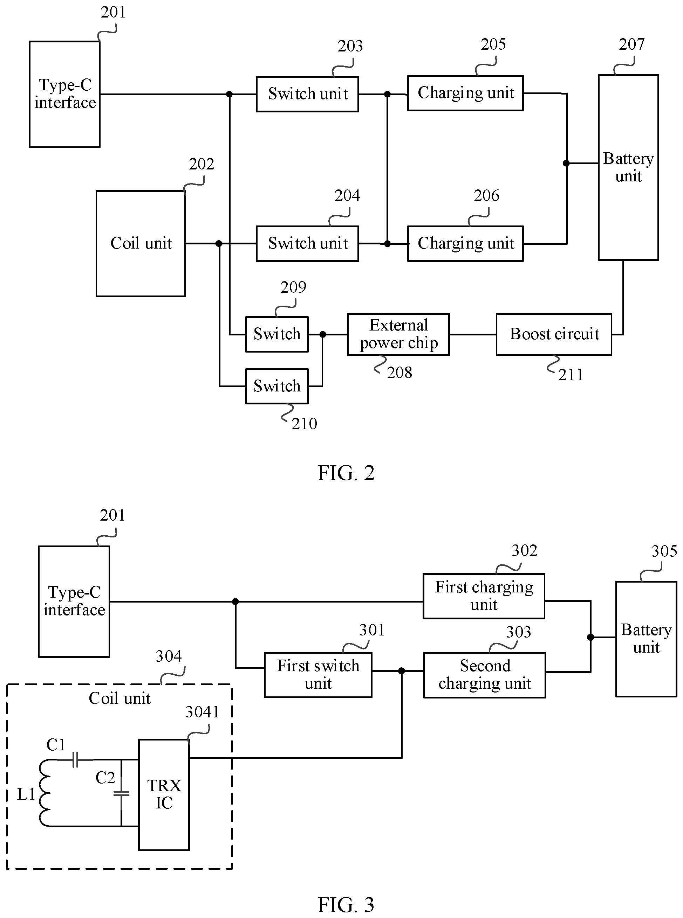

FIG. 2 is a circuit diagram of an electronic device in a possible implementation.

As shown in FIG. 2, in a possible implementation, the electronic device includes a Type-C interface 201, a coil unit 202, a switch unit 203, a switch unit 204, a charging unit 205, a charging unit 206, a battery unit 207, an external power chip 208, a switch 209, a switch 210, and a boost (boost) circuit 211. The boost circuit 211 is connected between the external power chip 208 and the battery unit 207.

It can be understood that the coil unit 202 includes a coil.

The charging unit 205 is connected between the Type-C interface 201 and the battery unit 207. The charging unit 206 is connected between the coil unit 202 and the battery unit 207.

One end of the switch unit 203 is connected to the Type-C interface 201, and an other end is respectively connected to the charging unit 205 and the charging unit 206.

One end of the switch unit 204 is connected to the coil unit 202, and an other end is respectively connected to the charging unit 205 and the charging unit 206.

The switch 209 is connected between the Type-C interface 201 and the external power chip 208. The switch 210 is connected between the coil unit 202 and the external power chip 208.

When the electronic device performs wired charging, the charging unit 205 may control the switch unit 203 to be in an on state. When the switch unit 203 is in the on state, the charging unit 205 and the charging unit 206 can both perform wired charging on the electronic device. When the electronic device does not perform wired charging, the charging unit 205 may control the switch unit 203 to be in an off state.

When the electronic device performs wireless charging, the charging unit 205 may control the switch unit 204 to be in the on state. When the switch unit 204 is in the on state, the charging unit 205 and the charging unit 206 can both perform wireless charging on the electronic device. When the electronic device does not perform wireless charging, the charging unit 205 may control the switch unit 204 to be in the off state.

The charging unit 205 and the charging unit 206 are both configured to perform wired charging for the electronic device when the switch unit 203 is in the on state, and to perform wireless charging for the electronic device when the switch unit 204 is in the on state.

When the electronic device performs wired reverse charging, the external power chip 208 may control the switch 209 to be in the on state, and perform wired reverse charging to a connected wired external device. When the electronic device does not perform wired reverse charging, the external power chip 208 may control the switch 209 to be in the off state.

When the electronic device performs wireless reverse charging, the external power chip 208 may control the switch 210 to be in the on state, and perform wireless reverse charging on the wireless external device placed on the electronic device. When the electronic device does not perform wireless reverse charging, the external power chip 208 may control the switch 210 to be in the off state.

When the electronic device performs wired reverse charging or wireless reverse charging, the battery unit 207 may transmit a voltage to the external power chip 208 through the boost circuit 211.

It may be learned from FIG. 2 that the Type-C interface 201, the switch unit 203, the charging unit 205, and the charging unit 206 form a wired charging link for charging the electronic device. The coil unit 202, the switch unit 204, the charging unit 205, and the charging unit 206 form a wireless charging link for charging the electronic device.

The Type-C interface 201, the switch 209, and the external power chip 208 form a wired reverse charging link of the electronic device.

The coil unit 202, the switch 210, and the external power chip 208 form a wireless reverse charging link of the electronic device.

When the electronic device simultaneously performs wired charging and wireless reverse charging, the electronic device controls the switch unit 203 and the switch 210 to be in the on state, and controls the switch unit 204 and the switch 209 to be in the off state. In this way, when the electronic device simultaneously performs the wired charging and the wireless reverse charging, the electronic device may perform the wired charging through the wired charging link, and perform the wireless reverse charging through the wireless reverse charging link. The wired charging link is isolated from the wireless reverse charging link.

When the electronic device simultaneously performs wired reverse charging and wireless charging, the electronic device controls the switch unit 204 and the switch 209 to be in the on state, and controls the switch unit 203 and the switch 210 to be in the off state. In this way, when the electronic device simultaneously performs the wired reverse charging and the wireless charging, the electronic device may perform the wired reverse charging on the external device through the wired reverse charging link, and perform the wireless charging through the wireless charging link. The wired reverse charging link is isolated from the wireless charging link.

However, as shown in FIG. 2, the electronic device includes four independent charging links. To isolate the wired charging link from the wireless reverse charging link when the electronic device simultaneously performs wired charging and wireless reverse charging, and isolate the wired reverse charging link from the wireless charging link when the electronic device simultaneously performs the wired reverse charging and the wireless charging, the electronic device has a relatively complex circuit.

In view of the above, an embodiment of this application provides an electronic device. A wired link of the electronic device may be formed by a Type-C interface and one charging unit, and a wireless link of the electronic device may be formed by a coil unit and another charging unit. A switch unit is connected between the wired link and the wireless link. When the wired link and the wireless link are simultaneously used, the isolation between the wired link and the wireless link can be implemented by controlling the switch unit to be in the off state. In the circuit of the electronic device provided in this embodiment of this application, the isolation between the wired link and the wireless link can be implemented through one switch unit. The entire circuit is relatively simple and does not require a plurality of switch units.

The electronic device provided in this embodiment of this application is described below with reference to some embodiments.

FIG. 3 is a circuit diagram of an electronic device according to an embodiment of this application. As shown in FIG. 3, the electronic device includes a Type-C interface 201, a coil unit 304, a first switch unit 301, a first charging unit 302, a second charging unit 303, and a battery unit 305. The coil unit 304 may include a coil L1, a first capacitor C1, a second capacitor C2, and a transceiver chip (wireless power receiver/transmitter integrated circuit, TRX IC) 3041.

The Type-C interface 201 is respectively electrically connected to the first charging unit 302 and the second charging unit 303. The first switch unit 301 is connected between the Type-C interface 201 and the second charging unit 303. An end of the coil unit 304 is connected between the first switch unit 301 and the second charging unit 303. It may be understood that the Type-C interface 201 is electrically connected to the first charging unit 302, which indicates that an electrical path exists between the Type-C interface 201 and the first charging unit 302. The Type-C interface 201 is electrically connected to the second charging unit 303, which indicates that an electrical path exists between the Type-C interface 201 and the second charging unit 303.

The TRX IC 3041 is respectively connected to two ends of the coil L1, the coil L1 is connected in series with the first capacitor C1, and the second capacitor C2 is connected in parallel with the coil L1. The first capacitor C1 and the second capacitor C2 are both resonant capacitors, and may both be configured to perform an LC resonance. The first capacitor C1 may be further configured to offset a part of leakage induction generated when the coil L1 is coupled to an electromagnetic induction of a coil of a wireless external device. A parallel resonant circuit may be provided in parallel with the second capacitor C2 and the coil L1, so as to detect a wireless external device placed on the electronic device.

The TRX IC 3041 supports a receive (RX) mode and a transmit (TX) mode.

When the electronic device simultaneously performs wired reverse charging and wireless charging, the electronic device controls the first switch unit 301 to be in an off state.

When the electronic device simultaneously performs the wired reverse charging and the wireless charging, no path exists between the Type-C interface 201 and the coil unit 304. The electronic device may perform the wired reverse charging through a wired link formed by the first charging unit 302 and the Type-C interface 201, and may further perform the wireless charging through a wireless link formed by the coil unit 304 and the second charging unit 303.

In an example, when the Type-C interface 201 of the electronic device is connected to a wired external device and the electronic device is placed on a wireless charger, the battery unit 305 of the electronic device charges the connected wired external device through the wired link formed by the first charging unit 302 and the Type-C interface 201. The wireless charger charges the battery unit 305 through the wireless link formed by the coil unit 304 and the second charging unit 303. The wired external device may be, for example, an OTG device.

In this way, when the electronic device simultaneously performs the wired reverse charging and the wireless charging, isolation between the wired link and the wireless link can be implemented by controlling the first switch unit 301 to be in the off state.

The electronic device may further be in any one of a scenario 1, a scenario 2, or a scenario 3 below. The scenario 1 is a scenario in which the electronic device simultaneously communicates with the wired external device and performs wireless charging.

The scenario 2 is a scenario in which the electronic device simultaneously performs wired charging and wireless reverse charging. For example, the Type-C interface 201 of the electronic device is connected to the wired charger, and the wireless external device is placed on the electronic device. The scenario 3 is a scenario in which the electronic device performs wired charging but does not perform wireless charging or wireless reverse charging.

When the electronic device is in the scenario 1, the scenario 2, or the scenario 3, the electronic device may also be configured to control the first switch unit 301 to be in the off state.

In an example, when the electronic device is in the scenario 1 and the electronic device identifies that the electronic device is placed on the wireless charger, the electronic device may control the first switch unit 301 to be in the off state. In this way, the electronic device may perform wireless charging through the wireless link formed by the coil unit 304 and the second charging unit 303. The electronic device identifies that the electronic device is placed on the wireless charger. For example, the electronic device obtains verification information sent by the wireless charger.

When the electronic device is in the scenario 2 and the electronic device identifies that the wireless external device is placed on the electronic device, the electronic device may control the first switch unit 301 to be in the off state. In this way, the electronic device can perform wired charging through the wired link formed by the Type-C interface 201 and the first charging unit 302, and may further perform wireless reverse charging through the wireless link formed by the second charging unit 303 and the coil unit 304.

When the electronic device is in the scenario 3 and the electronic device does not identify any wireless external device placed on the electronic device and does not receive the verification information sent by the wireless charger, the electronic device may control the first switch unit 301 to be in an on state. In this way, the electronic device can simultaneously perform wired charging on the battery unit 305 through the first charging unit and the second charging unit, thereby improving charging efficiency of the wired charging.

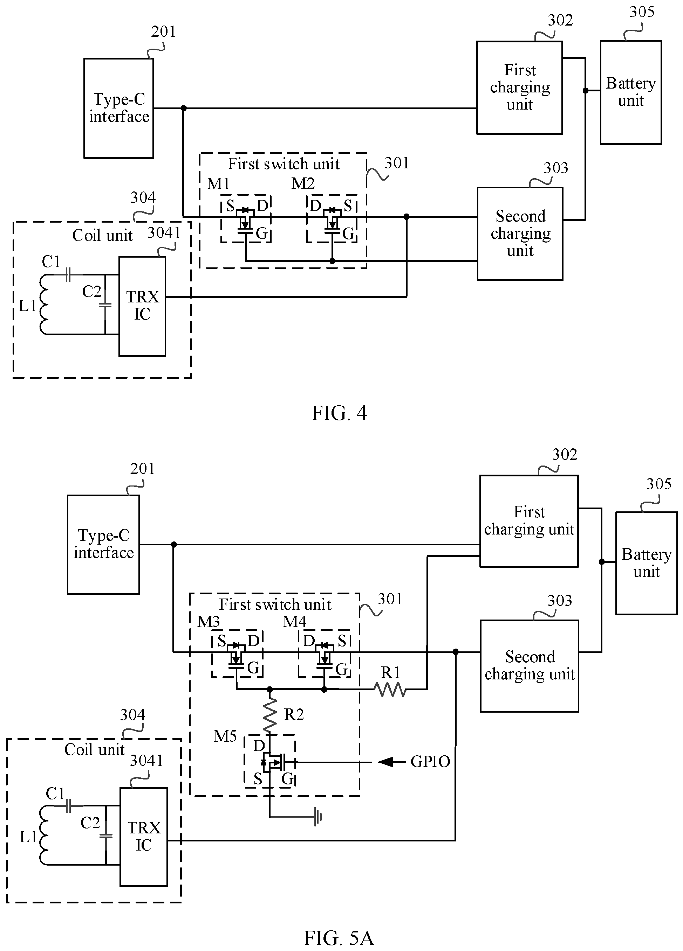

FIG. 4 is another circuit diagram of an electronic device according to an embodiment of this application.

As shown in FIG. 4, based on FIG. 3, the first switch unit 301 includes a first field effect transistor M1 and a second field effect transistor M2. A source terminal of the first field effect transistor M1 is connected to the Type-C interface 201, a drain terminal of the first field effect transistor M1 is connected to a drain terminal of the second field effect transistor M2, a source terminal of the second field effect transistor M2 is connected to the second charging unit 303, and the second charging unit 303 is further connected to a control terminal of the first field effect transistor M1 and a control terminal of the second field effect transistor.

The source terminal is also referred to as an S terminal. The drain terminal is also referred to as a D terminal. The control terminal is also referred to as a G terminal. The S terminal, the D terminal, and the G terminal may refer to the S terminal, the D terminal, and the G terminal in this embodiment of this application.

In this embodiment of this application, the field effect transistor may be an N-channel field effect transistor.

When the electronic device simultaneously performs wired reverse charging and wireless charging, the second charging unit 303 may control the first field effect transistor M1 and the second field effect transistor M2 to be both in an off state.

In an example, the first field effect transistor M1 may be the same as the second field effect transistor M2. When the electronic device simultaneously performs the wired reverse charging and the wireless charging, the second charging unit 303 may control a voltage of the control terminal of the first field effect transistor M1 and a voltage of the control terminal of the second field effect transistor M2, to control the first field effect transistor M1 and the second field effect transistor M2 both to be in the off state. A manner in which the first field effect transistor M1 and the second field effect transistor M2 are connected to each other at the drain terminal can reduce a probability of leakage when the first switch unit 301 is in the off state.

It may be understood that when the electronic device is in any one of the scenario 1, the scenario 2, or the scenario 3, the second charging unit 303 may control both the first field effect transistor M1 and the second field effect transistor M2 to be in the off state. A specific technical effect of this embodiment is similar to a corresponding technical effect in the embodiment of FIG. 3. Details are not described herein again.

Optionally, FIG. 5A is yet another circuit diagram of an electronic device according to an embodiment of this application.

As shown in FIG. 5A, based on FIG. 3, the first switch unit 301 includes a third field effect transistor M3, a fourth field effect transistor M4, and a fifth field effect transistor M5.

The first charging unit 301 is further connected to a control terminal of the third field effect transistor M3 and a control terminal of the fourth field effect transistor M4, a drain terminal of the fifth field effect transistor M5 is connected to a control terminal of the third field effect transistor M3 and a control terminal of the fourth field effect transistor M4, and a source terminal of the fifth field effect transistor M5 is grounded.

A source terminal of the third field effect transistor M3 is connected to the Type-C interface 201, a drain terminal of the third field effect transistor M3 is connected to a drain terminal of the fourth field effect transistor M4, and a source terminal of the fourth field effect transistor M4 is connected to the second charging unit 303.

The third field effect transistor M3 may be the same as the fourth field effect transistor M4.

In a possible implementation, when the electronic device performs wired charging, the first charging unit 302 may obtain a charging voltage from the Type-C interface 201, and the first charging unit 302 may transmit a drive voltage to the control terminal of the third field effect transistor M3 and the control terminal of the fourth field effect transistor M4, so that the third field effect transistor M3 and the fourth field effect transistor M4 are both in an on state. In this way, in the scenario 3, the electronic device may simultaneously perform the wired charging on the battery unit 305 through the first charging unit 302 and the second charging unit 303.

It may be understood that when the electronic device performs the wired reverse charging, the first charging unit 302 may obtain a reverse charging voltage from the battery unit 305, and the first charging unit 302 may transmit a drive voltage to the control terminal of the third field effect transistor M3 and the control terminal of the fourth field effect transistor M4, so that both the third field effect transistor M3 and the fourth field effect transistor M4 are in the on state.

In this way, in a scenario in which the electronic device performs the wired reverse charging but does not perform the wireless charging or the wireless reverse charging, the electronic device may simultaneously perform the wired reverse charging through the first charging unit 302 and the second charging unit 303, thereby improving efficiency of the wired reverse charging.

A scenario in which the electronic device performs wired reverse charging but does not perform wireless charging or wireless reverse charging may be referred to as a scenario 4. In the scenario four, for example, the Type-C interface 201 of the electronic device is connected to an OTG device and no wireless external device exists around the electronic device.

It may be understood that when the electronic device does not perform the wired charging or the wired reverse charging, the first charging unit 302 cannot obtain a charging voltage from the Type-C interface 201, and cannot obtain a reverse charging voltage from the battery unit 305. The first charging unit 302 cannot transmit a drive voltage to the control terminal of the third field effect transistor M3 and the control terminal of the fourth field effect transistor M4. In this way, the third field effect transistor M3 and the fourth field effect transistor M4 are both in the off state.

Since the third field effect transistor M3, the fourth field effect transistor M4, and the fifth field effect transistor M5 may all be N-channel field effect transistors, and the source terminal of the fifth field effect transistor M5 is grounded, a voltage of the control terminal of the third field effect transistor M3 and a voltage of the control terminal of the fourth field effect transistor M4 are both pulled low when the electronic device controls the fifth field effect transistor M5 to be in the on state, thereby causing the third field effect transistor M3 and the fourth field effect transistor M4 to be both in the off state. Therefore, when the electronic device simultaneously performs the wired reverse charging and the wireless charging, the electronic device may further control the fifth field effect transistor M5 to be in the on state, so as to control the third field effect transistor M3 and the fourth field effect transistor M4 to be both in the off state.

A manner in which the third field effect transistor M3 and the fourth field effect transistor M4 are connected to each other at the drain terminal can reduce a probability of leakage when the first switch unit 301 is in the off state.

To implement electrostatic protection for the second charging unit 303, the third field effect transistor M3 and the fourth field effect transistor M4 may both be N-channel field effect transistors that are high-voltage-tolerant, and the fifth field effect transistor M5 may be an N-channel field effect transistor that is not high-voltage-tolerant. A drive voltage of the third field effect transistor M3 and a drive voltage of the fourth field effect transistor M4 may both be 20 V. A drive voltage of the fifth field effect transistor M5 may be 3 V or 5 V.

When the third field effect transistor M3 and the fourth field effect transistor M4 are both in the on state, a system on chip (system on chip, SoC) of the electronic device may control a general purpose input output (general purpose input output, GPIO) voltage of the control terminal of the fifth field effect transistor M5 to control the fifth field effect transistor M5 to be in the on state, so as to control the third field effect transistor M3 and the fourth field effect transistor M4 to be both in the off state.

For example, the SoC may input a high-level signal to the control terminal of the fifth field effect transistor M5, to control the fifth field effect transistor M5 to be in the on state.

In this way, when a quantity of high-voltage drives of the electronic device is relatively small, a relatively low drive voltage may be used to control turning off a field effect transistor of a relatively high drive voltage, thereby flexibly controlling the first switch unit 301 to be in the off state, reducing control power consumption, and reducing control costs.

Optionally, as shown in FIG. 5A, based on FIG. 3, the electronic device further includes a first resistor R1 and a second resistor R2.

The first resistor R1 is connected between the first charging unit 302 and the control terminal of the third field effect transistor M3, and the first resistor R1 is further connected between the first charging unit 302 and the control terminal of the fourth field effect transistor M4. In this way, when the fifth field effect transistor M5 is in the on state, the first resistor R1 can reduce a probability the first charging unit 302 is damaged due to that a voltage at an output drive voltage terminal of the first charging unit 302 is pulled down. The first resistor R1 may be 100 KΩ.

The second resistor R2 is connected between the fifth field effect transistor M5 and the control terminal of the third field effect transistor M3, and the second resistor R2 is further connected between the fifth field effect transistor M5 and the control terminal of the fourth field effect transistor M4.

It may be understood that when the electronic device does not perform the wireless charging or the wireless reverse charging, the SoC may input a low-level signal to the control terminal of the fifth field effect transistor M5, to control the fifth field effect transistor M5 to be in the off state. For example, when the electronic device does not identify any wireless external device placed on the electronic device and the verification information sent by the wireless charger is not received, the SoC may control the fifth field effect transistor M5 to be in the off state. When the fifth field effect transistor M5 is in the off state and the third field effect transistor M3 and the fourth field effect transistor M4 are both in the on state, the second resistor R2 can reduce a probability that the drive voltage outputted by the first charging unit 302 damages the fifth field effect transistor M5. The second resistor R2 may be 1 KΩ.

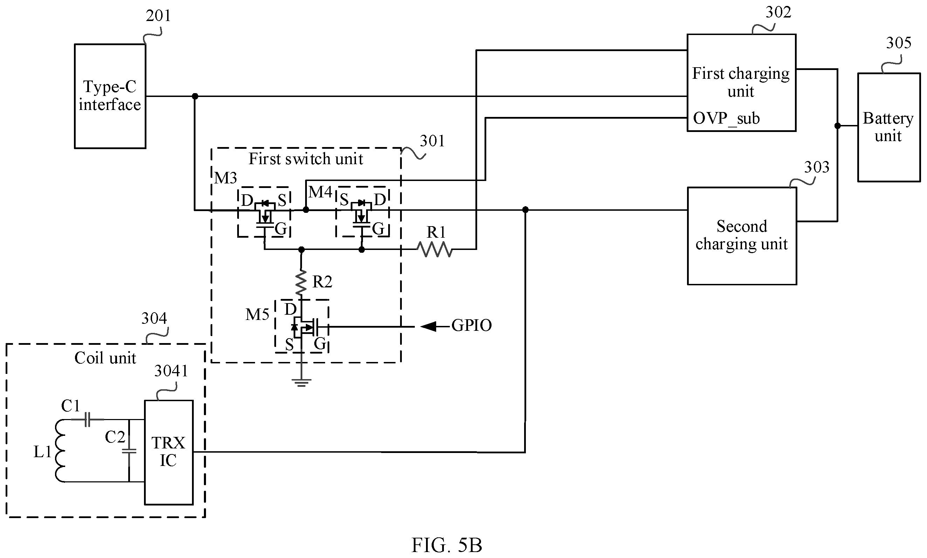

It may be understood that when the electronic device is in any one of the scenario 1, the scenario 2, and the scenario 3, the electronic device may also control the fifth field effect transistor M5 to be in the on state, to control the third field effect transistor M3 and the fourth field effect transistor M4 to be both in the off state. A specific technical effect of this embodiment is similar to a corresponding technical effect in the embodiment of FIG. 3. Details are not described herein again. Optionally, FIG. 5B is yet another circuit diagram of an electronic device according to an embodiment of this application.

As shown in FIG. 5B, a difference between FIG. 5B and FIG. 5A lies in that, in FIG. 5B, a drain terminal of a third field effect transistor M3 is connected to the Type-C interface 201, a source terminal of a third field effect transistor M3 is connected to a source terminal of the fourth field effect transistor M4, a drain terminal of a fourth field effect transistor M4 is connected to the second charging unit 303, and the first charging unit 302 is further connected to a source terminal of the third field effect transistor M3 and a source terminal of the fourth field effect transistor M4. In an example, an over-voltage protection source (OVP_SUB) of the first charging unit 302 is connected to the source terminal of the third field effect transistor M3 and the source terminal of the fourth field effect transistor M4, to control an on state and an off state of the third field effect transistor M3 and the fourth field effect transistor M4.

It may be understood that when the electronic device simultaneously performs the wired reverse charging and the wireless charging, a specific implementation principle and a technical effect of controlling, by the electronic device, the fifth field effect transistor M5 to be in the on state, to control the third field effect transistor M3 and the fourth field effect transistor M4 to be both in the off state are similar to a specific implementation principle and a technical effect in the corresponding scenario in the embodiment of FIG. 5A. Details are not described herein again. A manner in which the third field effect transistor M3 and the fourth field effect transistor M4 are connected to each other at the source terminal can also reduce a probability of leakage when the first switch unit 301 is in the off state.

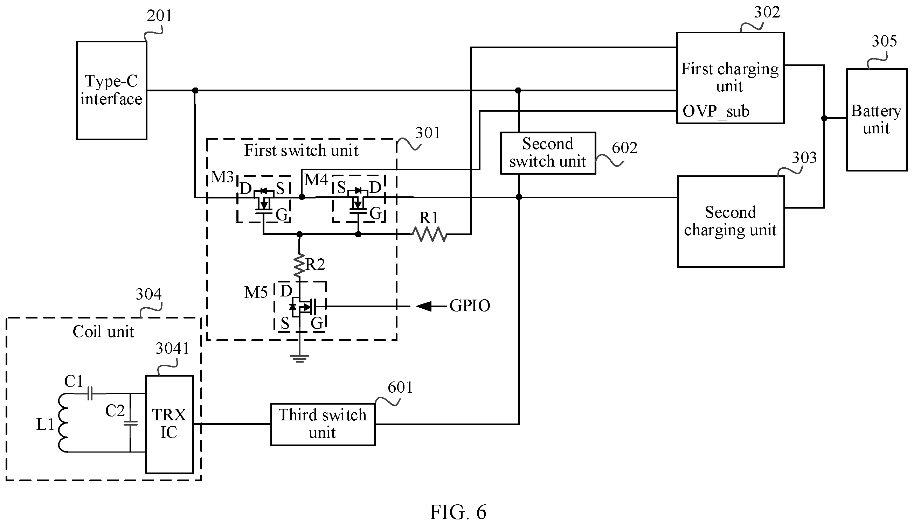

Optionally, FIG. 6 is yet another circuit diagram of an electronic device according to an embodiment of this application.

As shown in FIG. 6, based on FIG. 5B, the electronic device may further include a second switch unit 602.

The second switch unit 602 is connected between an end of the coil unit 304 and the first charging unit 302.

When the electronic device simultaneously performs the wired reverse charging and the wireless charging, the electronic device may control the second switch unit 602 to be in the off state, so as to isolate the wired link from the wireless link.

In the scenario 3, the electronic device may control both the first switch unit 301 and the second switch unit 602 to be both in the on state. In the scenario 3, the Type-C interface 201 and the second charging unit 303 may form a wired link to realize wired charging. In addition, the first switch unit 301 and the second switch unit 602 are connected in parallel. Therefore, a resistance of the wired link formed by the Type-C interface 201 and the second charging unit 303 can be reduced, and a probability of a decrease in wired charging efficiency of the link can be reduced.

Optionally, as shown in FIG. 6, based on FIG. 5B, the electronic device may further include a third switch unit 601.

The third switch unit 601 is connected between the coil unit 304 and an end of the coil unit 304. For example, the third switch unit 601 is connected between an end of the transceiver chip 3041 and the second charging unit 303.

When the electronic device simultaneously performs the wired reverse charging and the wireless charging, the electronic device may control the third switch unit 601 to be in the on state.

Alternatively, in the scenario 3, the electronic device may control the third switch unit 601 to be in the off state. In this way, in the scenario 3, the third switch unit 601 can reduce the probability of leakage through the coil unit 304 and reduce the probability of reduction of wired charging efficiency.

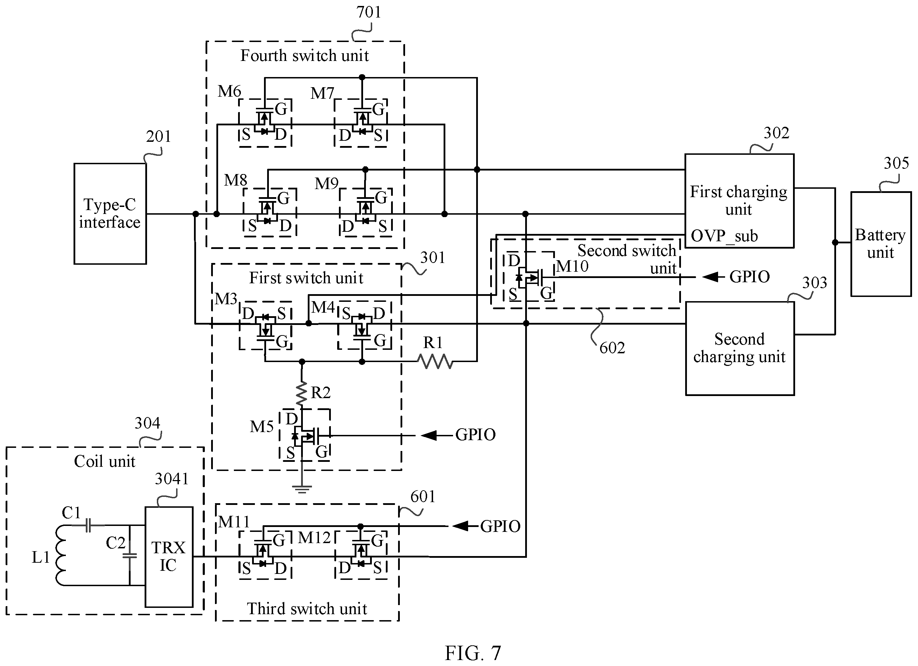

Optionally, FIG. 7 is yet another circuit diagram of an electronic device according to an embodiment of this application.

As shown in FIG. 7, based on FIG. 6, the electronic device further includes a fourth switch unit 701. The fourth switch unit is connected between the Type-C interface 201 and the first charging unit 302.

The fourth switch unit 701 includes a sixth field effect transistor M6 and a seventh field effect transistor M7.

A source terminal of the sixth field effect transistor M6 is connected to the Type-C interface 201, a drain terminal of the sixth field effect transistor M6 is connected to a drain terminal of the seventh field effect transistor M7, and a source terminal of the seventh field effect transistor M7 is connected to the first charging unit 302. The first charging unit 302 is further connected to a control terminal of the sixth field effect transistor M6 and a control terminal of the seventh field effect transistor M7.

When the electronic device simultaneously performs the wired reverse charging and the wireless charging, the first charging unit 302 may control the sixth field effect transistor M6 and the seventh field effect transistor M7 to be both in the on state.

A manner in which the sixth field effect transistor M6 and the seventh field effect transistor M7 are connected to each other at the drain terminal can reduce a probability of leakage when the fourth switch unit 701 is in the off state. The sixth field effect transistor M6 and the seventh field effect transistor M7 may both be N-channel field effect transistors that are high-voltage-tolerant, to provide electrostatic protection for the first charging unit 302. The sixth field effect transistor M6 and the seventh field effect transistor M7 may be the same as the third field effect transistor M3.

A specific implementation principle of controlling, by the first charging unit 302, the sixth field effect transistor M6 and the seventh field effect transistor M7 to be both in the on state is similar to a specific implementation principle of controlling, by the first charging unit 302, the third field effect transistor M3 and the fourth field effect transistor M4 to be both in the on state in the embodiment of FIG. 5A. Details are not described herein again.

It may be understood that for a specific implementation principle of controlling, by the first charging unit 302, the sixth field effect transistor M6 and the seventh field effect transistor M7 to be both in the off state, reference may be made to a specific implementation principle of not transmitting, by the first charging unit 302, a drive voltage to the control terminal of the third field effect transistor M3 and the control terminal of the fourth field effect transistor M4 in the embodiment of FIG. 5A. Details are not described herein again.

In a scenario where the electronic device performs the wireless charging but does not perform the wired reverse charging or the wired charging, the electronic device may control the first switch unit 301 and the fourth switch unit 701 to be both in the off state, and further control the second switch unit 602 and the third switch unit 601 to be in the on state. In this way, the electronic device can simultaneously perform the wireless charging on the battery unit 305 through the first charging unit 302 and the second charging unit 303, which can improve the charging efficiency of the wireless charging.

Optionally, as shown in FIG. 7, based on FIG. 6, the fourth switch unit 701 may further include an eighth field effect transistor M8 and a ninth field effect transistor M9.

A source terminal of the eighth field effect transistor M8 is connected to the Type-C interface 201, a drain terminal of the eighth field effect transistor M8 is connected to a drain terminal of the ninth field effect transistor M9, and a source terminal of the ninth field effect transistor M9 is connected to the first charging unit 302. The first charging unit 302 is further connected to a control terminal of the eighth field effect transistor M8 and a control terminal of the ninth field effect transistor M9. When the electronic device simultaneously performs the wired reverse charging and the wireless charging, the first charging unit 302 may control the eighth field effect transistor M8 and the ninth field effect transistor M9 to be both in the on state.

The eighth field effect transistor M8 and the ninth field effect transistor M9 may be the same as the third field effect transistor M3. A specific implementation principle of controlling, by the first charging unit 302, the eighth field effect transistor M8 and the ninth field effect transistor M9 to be both in the on state is similar to a specific implementation principle of controlling, by the first charging unit 302, the third field effect transistor M3 and the fourth field effect transistor M4 to be both in the on state in the embodiment of FIG. 5A. Details are not described herein again.

For the wired link formed by the Type-C interface 201, the fourth switch unit 701, and the first charging unit 302, a resistance of the wired link when the fourth switch unit 701 includes the sixth field effect transistor M6, the seventh field effect transistor M7, the eighth field effect transistor M8, and the ninth field effect transistor M9 is less than a resistance of the wired link when the fourth switch unit 701 includes the sixth field effect transistor M6 and the seventh field effect transistor M7. Therefore, when the fourth switch unit 701 includes the sixth field effect transistor M6, the seventh field effect transistor M7, the eighth field effect transistor M8, and the ninth field effect transistor M9, a probability that charging efficiency is reduced when the electronic device performs the wired charging on the wired link can be reduced.

The eighth field effect transistor M8 and the ninth field effect transistor M9 may both be N-channel field effect transistors that are high-voltage-tolerant, to provide electrostatic protection for the first charging unit 302.

Optionally, as shown in FIG. 7, based on FIG. 6, the second switch unit 602 may include a tenth field effect transistor M10. The tenth field effect transistor M10 may be the same as the fifth field effect transistor M5.

The third switch unit 601 may include an eleventh field effect transistor M11 and a twelfth field effect transistor M12. A source terminal of the eleventh field effect transistor M11 is connected to an end of the transceiver chip 3041, a drain terminal of the eleventh field effect transistor M11 is connected to a drain terminal of the twelfth field effect transistor M12, and a source terminal of the twelfth field effect transistor M12 is connected to the second charging unit 303. The eleventh field effect transistor M11 and the twelfth field effect transistor M12 may be the same as the third field effect transistor M3.

When the electronic device simultaneously performs the wired reverse charging and the wireless charging, the electronic device may transmit a drive voltage to a control terminal of the eleventh field effect transistor M11 and a control terminal of the twelfth field effect transistor M12, so as to control both the eleventh field effect transistor M11 and the twelfth field effect transistor M12 to be in the on state.

Alternatively, in the scenario 3, the electronic device may not transmit the drive voltage to the control terminal of the eleventh field effect transistor M11 and the control terminal of the twelfth field effect transistor M12, so as to control the eleventh field effect transistor M11 and the twelfth field effect transistor M12 to be both in the off state.

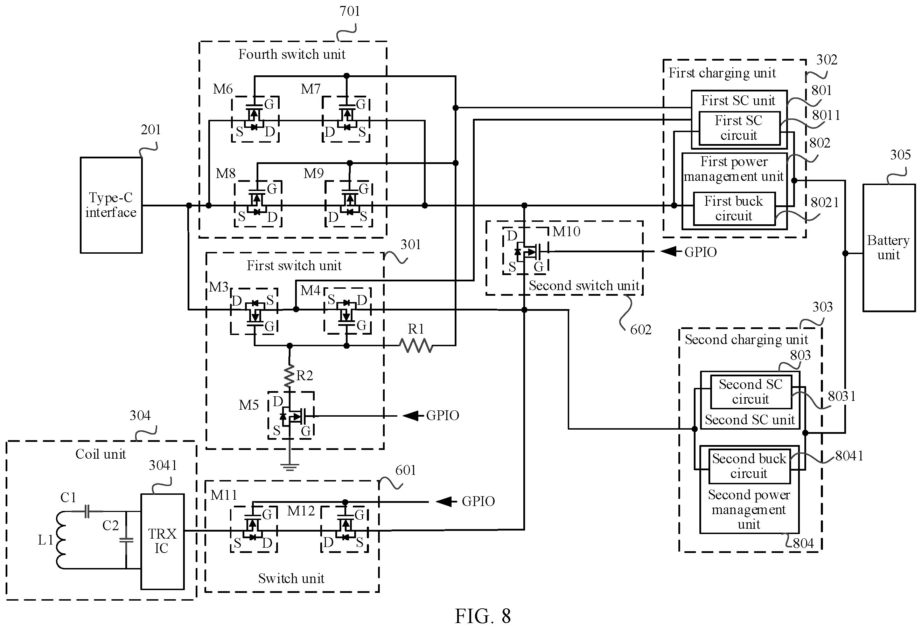

Optionally, FIG. 8 is yet another circuit diagram of an electronic device according to an embodiment of this application.

As shown in FIG. 8, based on FIG. 7, the first charging unit 302 includes a first super charge (super charge, SC) unit 801 and a first power management unit (power management unit, PMU) 802. The second charging unit 303 includes a second SC unit 803 and a second power management unit 804. The first SC unit 801 is connected to the control terminal of the third field effect transistor M3, the control terminal of the fourth field effect transistor M4, the control terminal of the sixth field effect transistor M6, the control terminal of the seventh field effect transistor M7, the control terminal of the eighth field effect transistor M8, and the control terminal of the ninth field effect transistor M9. An OVP_SUB of the first SC unit 801 is further connected to the source terminal of the third field effect transistor M3 and the source terminal of the fourth field effect transistor M4.

When the electronic device performs the wired charging, the first SC unit 801 may transmit a drive voltage to the control terminal of the third field effect transistor M3, the control terminal of the fourth field effect transistor M4, the control terminal of the sixth field effect transistor M6, the control terminal of the seventh field effect transistor M7, the control terminal of the eighth field effect transistor M8, and the control terminal of the ninth field effect transistor M9, so as to control the third field effect transistor M3, the fourth field effect transistor M4, the sixth field effect transistor M6, the seventh field effect transistor M7, the eighth field effect transistor M8, and the ninth field effect transistor M9 to be in the on state.

When the electronic device does not perform the wired charging, the first SC unit 801 may not transmit the drive voltage to the control terminal of the third field effect transistor M3, the control terminal of the fourth field effect transistor M4, the control terminal of the sixth field effect transistor M6, the control terminal of the seventh field effect transistor M7, the control terminal of the eighth field effect transistor M8, and the control terminal of the ninth field effect transistor M9, so as to control the third field effect transistor M3, the fourth field effect transistor M4, the sixth field effect transistor M6, the seventh field effect transistor M7, the eighth field effect transistor M8, and the ninth field effect transistor M9 to be in the off state.

The first SC unit 801 includes a first SC circuit 8011. The first power management unit 802 includes a first buck (buck) circuit 8021. The first SC circuit 8011 is connected between the source terminal of the seventh field effect transistor M7 and the battery unit 305. The first SC circuit 8011 is further connected between the source terminal of the ninth field effect transistor M9 and the battery unit 305. The first buck (buck) circuit 8021 is connected between the source terminal of the seventh field effect transistor M7 and the battery unit 305. The first buck (buck) circuit 8021 is further connected between the source terminal of the ninth field effect transistor M9 and the battery unit 305.

The second SC unit 803 includes a second SC circuit 8031. The second power management unit 804 includes a second buck circuit 8041. The second SC circuit 8031 is connected between the drain terminal of the fourth field effect transistor M4 and the battery unit 305. The second buck circuit 8041 is connected between the drain terminal of the fourth field effect transistor M4 and the battery unit 305.

When the electronic device simultaneously performs the wired charging and the wireless reverse charging, the first charging unit 302 may perform the wired charging on the battery unit 305 at a first power through the first SC circuit 8011 in a forward direction, or perform the wired charging on the battery unit 305 at a second power through the first buck circuit 8021 in a forward direction. The first power is greater than the second power.

When the electronic device simultaneously performs the wired charging and the wireless reverse charging, the second charging unit 303 may perform the wireless reverse charging at a third power through the second SC circuit 8031 in a reverse direction, or perform wireless reverse charging at a fourth power through the second buck circuit 8041 in a reverse direction. The third power is greater than the fourth power.

Optionally, when the electronic device simultaneously performs the wired reverse charging and the wireless charging, the first charging unit 302 may further perform the wired reverse charging at a fifth power through the first SC circuit 8011 in a reverse direction, or perform the wired reverse charging on the battery unit 305 at a sixth power through the first buck circuit 8021 in a reverse direction. The fifth power is greater than the sixth power.

When the electronic device simultaneously performs the wired reverse charging and the wireless charging, the second charging unit 303 may further perform the wireless charging on the battery unit 305 at a seventh power through the second SC circuit 8031 in a forward direction, or perform the wireless charging to the battery unit 305 at an eighth power through the second buck circuit 8041 in a forward direction. The seventh power is greater than the eighth power.

It may be understood that the SC circuit in a forward direction has a step-down function. The SC circuit in a reverse direction has a voltage doubling or boosting function. The buck circuit in a forward direction has a step-down function. The buck circuit in a reverse direction may be referred to as a boost circuit. In other words, the circuit has a boosting function.

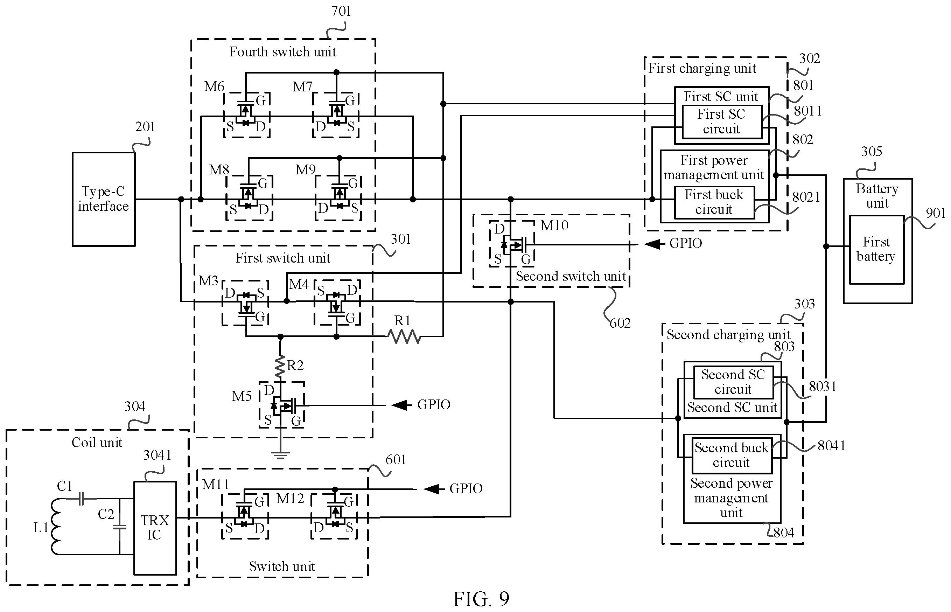

Optionally, FIG. 9 is yet another circuit diagram of an electronic device according to an embodiment of this application.

As shown in FIG. 9, based on FIG. 8, the battery unit 305 may include a first battery 901. The first battery 901 is respectively connected to the first SC circuit 8011, the first buck circuit 8021, the second SC circuit 8031, and the second buck circuit 8041.

In this embodiment, the wired reverse charging of the electronic device may be understood as that the first battery 901 charges a wired external device connected to the Type-C interface 201 through the wired link. The wireless reverse charging of the electronic device may be understood as that the first battery 901 charges a wireless external device placed on the electronic device through the wireless link.

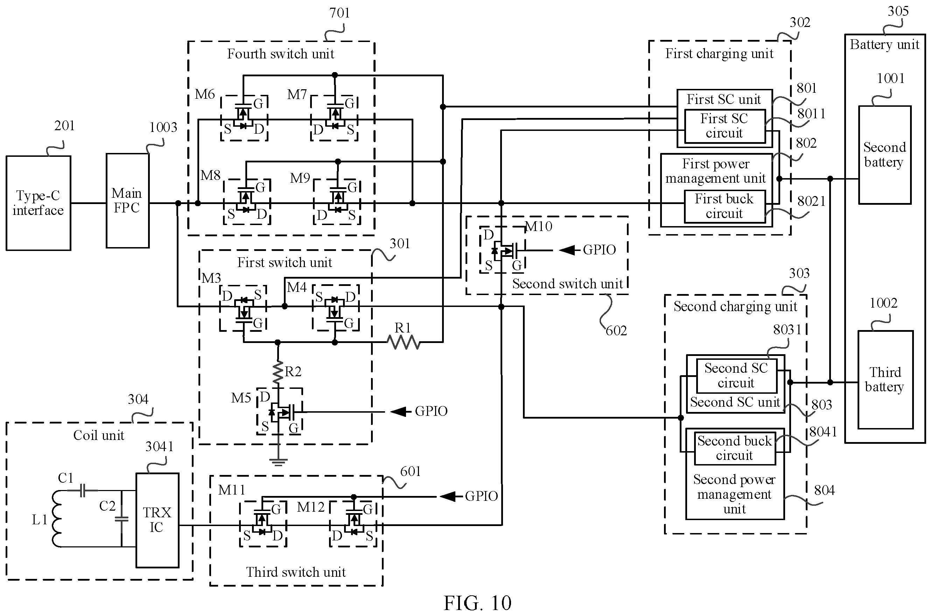

Optionally, FIG. 10 is yet another circuit diagram of an electronic device according to an embodiment of this application.

As shown in FIG. 10, based on FIG. 8, the battery unit 305 may include a second battery 1001 and a third battery 1002. The second battery 1001 is respectively connected to the first SC circuit 8011, the first buck circuit 8021, the second SC circuit 8031, and the second buck circuit 8041. The third battery 1002 is respectively connected to the first SC circuit 8011, the first buck circuit 8021, the second SC circuit 8031, and the second buck circuit 8041.

In this embodiment, the wired reverse charging of the electronic device may be understood as that the second battery 1001 and the third battery 1002 charge a wired external device connected to the Type-C interface 201 through the wired link. The wireless reverse charging of the electronic device may be understood as that the second battery 1001 and the third battery 1002 charge the wireless external device placed on the electronic device through the wireless link.

Optionally, as shown in FIG. 10, based on FIG. 8, the electronic device may further include a main flexible printed circuit (flexible printed circuit, FPC) 1003.

The main FPC 1003 is connected between the Type-C interface 201 and the fourth switch unit 701, and the main FPC 1003 may be connected between the Type-C interface 201 and the first switch unit 301. In this way, manufacturing process difficulty of the electronic device can be reduced.

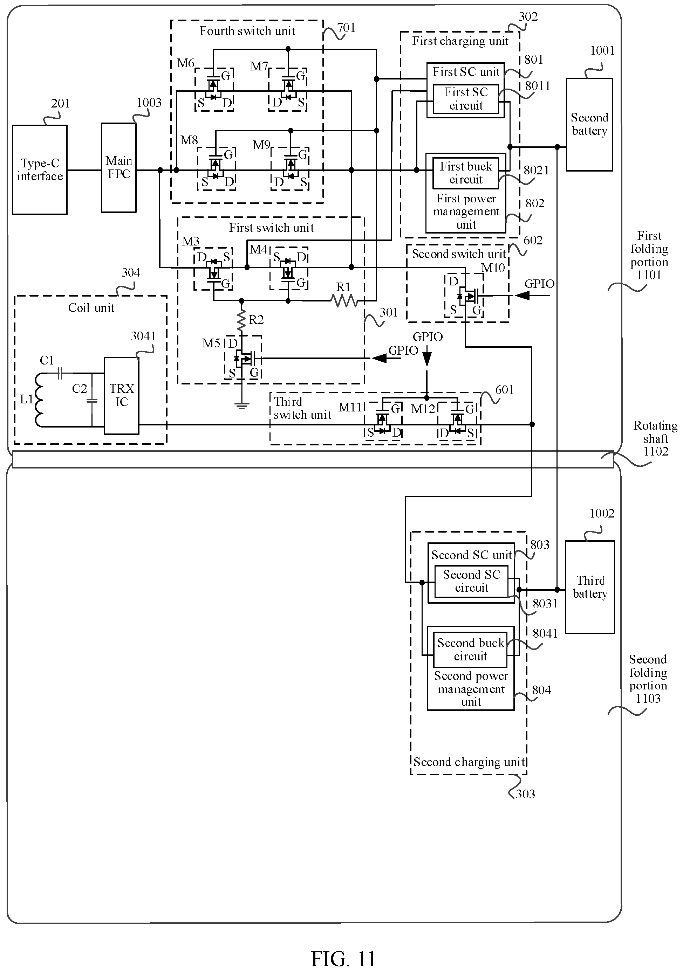

Optionally, FIG. 11 is yet another circuit diagram of an electronic device according to an embodiment of this application.

As shown in FIG. 11, based on FIG. 10, the electronic device includes a first folding portion 1101, a rotating shaft 1102, and a second folding portion 1103. The first folding portion 1101 is connected to the second folding portion 1103 through the rotating shaft 1102. The rotating shaft 1102 is configured to rotate the first folding portion 1101 around the rotating shaft 1102, and further configured to rotate the second folding portion 1103 around the rotating shaft 1102.

The Type-C interface 201, the main FPC 1003, the fourth switch unit 701, the first switch unit 301, the first charging unit 302, the second switch unit 602, the third switch unit 601, the coil unit 304, and the second battery 1001 are arranged on the first folding portion 1101.

The second charging unit 303 and the third battery 1002 are arranged on the second folding portion 1103.

In this way, the electronic device can be more lightweight. In addition, when the electronic device simultaneously performs the wired reverse charging and the wireless charging, the second battery 1002 and a heat-generating area of the second charging unit 303 may be arranged on the second folding portion 1103, thereby reducing a probability of wired reverse charging efficiency and wireless charging efficiency that are reduced because the heat-generating area is located on the first folding portion 1101 of the electronic device.

An embodiment of this application further provides a control method, applied to the electronic device provided in embodiments of this application, including: controlling the first switch unit 301 to be in an off state when the electronic device simultaneously performs wired reverse charging and wireless charging, where the wired charging is implemented through the Type-C interface 201 and the first charging unit 302, and the wireless reverse charging is implemented through the second charging unit 303 and the coil unit 304.

According to the control method provided in this embodiment, when the electronic device simultaneously performs the wired reverse charging and the wireless charging, the first switch unit is controlled to be in the off state, so that the wired charging link can be isolated from the wireless charging link.

The control method provided in embodiments of this application is further described below with reference to the circuit diagram shown in FIG. 5B.

When the Type-C interface 201 of the electronic device is connected to the wired charger, the first charging unit 302 charges the battery unit 305 by using a voltage outputted by the Type-C interface 201, and inputs a drive voltage to the control terminal of the third field effect transistor M3 and the control terminal of the fourth field effect transistor M4, so that the third field effect transistor M3 and the fourth field effect transistor M4 are both in the on state. The second charging unit 303 charges the battery unit 305 by using a voltage transmitted from the drain terminal of the fourth field effect transistor M4. In this way, the charging efficiency of the battery unit 305 can be improved.

When the Type-C interface 201 of the electronic device is connected to the wired charger, the SoC of the electronic device may input the high-level signal to the control terminal of the fifth field effect transistor M5 to control the fifth field effect transistor M5 to be in the on state if the electronic device identifies that the wireless external device is placed on the electronic device, thereby controlling the third field effect transistor M3 and the fourth field effect transistor M4 to be in the off state. The first charging unit 302 charges the battery unit 305 by using a voltage outputted by the Type-C interface 201. The second charging unit 303 uses the voltage outputted by the battery unit 305 to charge the wireless external device through the coil unit 304. In this way, when the electronic device simultaneously performs the wired charging and the wireless reverse charging, the wired charging link is isolated from the wireless reverse charging link.

When the Type-C interface 201 of the electronic device is connected to the wired charger and the wireless external device is placed on the electronic device, the SoC may input the low-level signal to the control terminal of the fifth field effect transistor M5 to control the fifth field effect transistor M5 to be in the off state if the electronic device identifies that no wireless external device is placed on the electronic device, thereby causing the third field effect transistor M3 and the fourth field effect transistor M4 to be in the on state. The first charging unit 302 and the second charging unit 303 both charge the battery unit 305.

When the Type-C interface 201 of the electronic device is connected to the wired charger, no wireless external device is placed on the electronic device, and the electronic device is also not placed on a wireless charger, the first charging unit 302 cannot obtain a voltage from the Type-C interface 201 if the electronic device is disconnected from the wired charger. In this way, the first charging unit 302 stops inputting a drive voltage to the control terminal of the third field effect transistor M3 and the control terminal of the fourth field effect transistor M4, so that the third field effect transistor M3 and the fourth field effect transistor M4 are both in the off state. Neither the first charging unit 302 nor the second charging unit 303 charges the battery unit 305.

When the Type-C interface 201 of the electronic device is not connected to the wired external device, no wireless external device is placed on the electronic device, and the electronic device is also not placed on the wireless charger, the SoC of the electronic device may input the high-level signal to the control terminal of the fifth field effect transistor M5 to control the fifth field effect transistor M5 to be in the on state if the electronic device identifies that the wireless external device is placed on the electronic device. Because in this case, the third field effect transistor M3 and the fourth field effect transistor M4 are both in the off state, the second charging unit 303 uses the voltage outputted by the battery unit 305 to charge the wireless external device through the coil unit 304. If the electronic device identifies that the electronic device is placed on the wireless charger, the SoC of the electronic device may input the high-level signal to the control terminal of the fifth field effect transistor M5, to control the fifth field effect transistor M5 to be in the on state. Because in this case, the third field effect transistor M3 and the fourth field effect transistor M4 are both in the off state, the second charging unit 303 charges the battery unit 305 by using the voltage outputted by the wireless charger.

When the electronic device is placed on the wireless charger, namely, the electronic device performs the wireless reverse charging, the first charging unit 302 charges the battery unit 305 by using a voltage outputted by the Type-C interface 201, and inputs the drive voltage to the control terminal of the third field effect transistor M3 and the control terminal of the fourth field effect transistor M4 if the Type-C interface 201 of the electronic device is connected to the wired charger, so that the third field effect transistor M3 and the fourth field effect transistor M4 are both in the on state.

It may be understood that according to the control method provided in this embodiment, if the Type-C interface 201 of the electronic device is connected to the wired charger, that is, the electronic device performs the wired charging, the first charging unit 302 controls the third field effect transistor M3 and the fourth field effect transistor M4 to be both in the on state, so that the first charging unit 302 and the second charging unit 303 both charge the battery unit 305. Once the electronic device is placed on the wireless charger or the wireless external device is placed on the electronic device, namely, when the electronic device performs the wireless charging or the wireless reverse charging, the SoC controls the third field effect transistor M3 and the fourth field effect transistor M4 to be both in the off state. In this way, the isolation between the wired link and the wireless link is implemented.

The control method of embodiments of this application has been described above. The apparatus provided in embodiments of this application for performing the foregoing method is described below. It may be understood by a person skilled in the art that the method and the apparatus can be combined with or refer to each other. The related apparatus provided in embodiments of this application can perform the steps in the foregoing list sorting method.

The control method provided in embodiments of this application may be applied to an electronic device having a communication function. The electronic device includes a terminal device. For a specific device form and the like of the terminal device, reference may be made to the foregoing related descriptions. Details are not described herein again.

An embodiment of this application provides an electronic device, including a processor and a memory. The memory stores computer-executable instructions. The processor executes the computer-executable instructions stored in the memory, so that the electronic device performs the foregoing method.

An embodiment of this application provides a chip. The chip includes a processor, and the processor is configured to invoke a computer program in a memory, to perform the technical solutions in the foregoing embodiments. The implementation principles and technical effects thereof are similar to those in the foregoing related embodiments. Details are not described herein again.

An embodiment of this application further provides a computer-readable storage medium. The computer-readable storage medium stores a computer program. The computer program, when executed by a processor, implements the foregoing method. All or some of methods in the foregoing embodiments may be implemented by using software, hardware, firmware, or any combination thereof. If implemented in software, a function may be stored on or transmitted on a computer readable medium as one or more instructions or code. The computer readable medium may include a computer storage medium and a communications medium, and may further include any medium that can transmit a computer program from one place to another. The storage medium may be any target medium accessible to a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by a computer. In addition, any connection is appropriately referred to as a computer-readable medium. For example, if software is transmitted from a website, a server, or another remote source by using a coaxial cable, an optical fiber cable, a twisted pair, a digital subscriber line (Digital Subscriber Line, DSL) or wireless technologies (such as infrared ray, radio, and microwave), the coaxial cable, the optical fiber cable, the twisted pair, the DSL, or the wireless technologies such as the infrared ray, the radio, and the microwave are included in the definition of the medium. The magnetic disk and the optical disc used herein include a compact disc, a laser disc, an optical disc, a digital versatile disc (Digital Versatile Disc, DVD), a floppy disk, and a Blu-ray disc. The magnetic disk generally reproduces data in a magnetic manner, and the optical disc reproduces data optically by using a laser. The foregoing combination should also be included in the scope of the computer-readable medium.

An embodiment of this application further provides a computer program product, including a computer program. When the computer program is run, a computer is caused to perform the foregoing method.

Embodiments of this application are described with reference to the flowcharts and/or block diagrams of the method, the device (system), and the computer program product according to embodiments of this application. It should be understood that computer program instructions can implement each procedure and/or block in the flowcharts and/or block diagrams and a combination of procedures and/or blocks in the flowcharts and/or block diagrams. The computer program instructions may be provided for a general-purpose computer, a dedicated computer, an embedded processor, or a processing unit of another programmable device to generate a machine, so that the instructions executed by a computer or a processing unit of another programmable data processing device generate an apparatus for implementing a specific function in one or more processes in the flowcharts and/or in one or more blocks in the block diagrams.

The foregoing specific implementations further describe the objectives, technical solutions in detail, and beneficial effects of the present invention. It should be understood that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. An electronic device, having a wired reverse charging function and a wireless charging function, comprising a wired interface, a coil unit, a first switch unit, a first charging unit, and a second charging unit, wherein
the wired interface is respectively electrically connected to the first charging unit and the second charging unit, the first switch unit is connected between the wired interface and the second charging unit, and an end of the coil unit is connected between the first switch unit and the second charging unit; and
when the electronic device simultaneously performs wired reverse charging and wireless charging, the first switch unit is in an off state, no path exists between the wired interface and the coil unit, the electronic device performs the wired reverse charging through the first charging unit and the wired interface, and the electronic device performs the wireless charging through the coil unit and the second charging unit.

2. The electronic device according to claim 1, wherein the first switch unit comprises a first field effect transistor and a second field effect transistor; and
a source terminal of the first field effect transistor is connected to the wired interface, a drain terminal of the first field effect transistor is connected to a drain terminal of the second field effect transistor, a source terminal of the second field effect transistor is connected to the second charging unit, and the second charging unit is further connected to a control terminal of the first field effect transistor and a control terminal of the second field effect transistor; and
when the electronic device simultaneously performs wired reverse charging and wireless charging, the first field effect transistor and the second field effect transistor are both in an off state.

3. The electronic device according to claim 1, wherein the first switch unit comprises a third field effect transistor, a fourth field effect transistor, and a fifth field effect transistor;
the first charging unit is further connected to a control terminal of the third field effect transistor and a control terminal of the fourth field effect transistor, a drain terminal of the fifth field effect transistor is connected to a control terminal of the third field effect transistor and a control terminal of the fourth field effect transistor, and a source terminal of the fifth field effect transistor is grounded;
a source terminal of the third field effect transistor is connected to the wired interface, a drain terminal of the third field effect transistor is connected to a drain terminal of the fourth field effect transistor, and a source terminal of the fourth field effect transistor is connected to the second charging unit; or the drain terminal of the third field effect transistor is connected to the wired interface, the source terminal of the third field effect transistor is connected to the source terminal of the fourth field effect transistor, the drain terminal of the fourth field effect transistor is connected to the second charging unit, and the first charging unit is further connected to the source terminal of the third field effect transistor and the source terminal of the fourth field effect transistor; and
when the electronic device simultaneously performs wired reverse charging and wireless charging, the fifth field effect transistor is in an on state, and the third field effect transistor and the fourth field effect transistor are both in an off state.

4. The electronic device according to claim 3, further comprising a first resistor, wherein the first resistor is connected between the first charging unit and the control terminal of the third field effect transistor, and the first resistor is further connected between the first charging unit and the control terminal of the fourth field effect transistor.

5. The electronic device according to claim 4, further comprising a second resistor, wherein the second resistor is connected between the fifth field effect transistor and the control terminal of the third field effect transistor, and the second resistor is further connected between the fifth field effect transistor and the control terminal of the fourth field effect transistor.

6. The electronic device according to any one of claims 1 to 5, wherein when the electronic device communicates with a wired external device and performs wireless charging, the first switch unit is in an off state, no path exists between the wired interface and the coil unit, and the electronic device performs the wireless charging through the coil unit and the second charging unit.

7. The electronic device according to any one of claims 1 to 6, further having a wired charging function and a wireless reverse charging function, wherein when the electronic device simultaneously performs wired charging and wireless reverse charging, the first switch unit is in an off state, no path exists between the wired interface and the coil unit, the electronic device performs wired charging through the wired interface and the first charging unit, and the electronic device performs wireless reverse charging through the second charging unit and the coil unit.

8. The electronic device according to any one of claims 1 to 7, further having the wired charging function and the wireless reverse charging function, wherein when the electronic device performs wired charging but does not perform wireless charging or wireless reverse charging, the first switch unit is in an on state, no path exists between the wired interface and the coil unit, and the electronic device performs the wired charging through the first charging unit and the second charging unit.

9. The electronic device according to any one of claims 1 to 8, further comprising a second switch unit, wherein the second switch unit is connected between an end of the coil unit and the first charging unit; and
when the electronic device simultaneously performs wired reverse charging and wireless charging, the second switch unit is in an off state.

10. The electronic device according to claim 9, further having the wired charging function and the wireless reverse charging function, wherein the electronic device further comprises a third switch unit, the third switch unit is connected between the coil unit and the end; and
when the electronic device simultaneously performs wired reverse charging and wireless charging, the third switch unit is in an on state; or when the electronic device performs wired charging but does not perform wireless charging or wireless reverse charging, the third switch unit is in an off state.

11. The electronic device according to claim 10, further comprising a fourth switch unit, wherein the fourth switch unit is connected between the wired interface and the first charging unit;
the fourth switch unit comprises a sixth field effect transistor and a seventh field effect transistor;
a source terminal of the sixth field effect transistor is connected to the wired interface, a drain terminal of the sixth field effect transistor is connected to a drain terminal of the seventh field effect transistor, a source terminal of the seventh field effect transistor is connected to the first charging unit, and the first charging unit is further connected to a control terminal of the sixth field effect transistor and a control terminal of the seventh field effect transistor; and
when the electronic device simultaneously performs wired reverse charging and wireless charging, the sixth field effect transistor and the seventh field effect transistor are both in an on state.

12. The electronic device according to claim 11, wherein when the electronic device performs wireless charging but does not perform wired reverse charging or wired charging, the first switch unit and the fourth switch unit are both in an off state, the second switch unit and the third switch unit are both in an on state, and the electronic device performs the wireless charging through the first charging unit and the second charging unit.

13. The electronic device according to claim 11 or 12, wherein the fourth switch unit further comprises an eighth field effect transistor and a ninth field effect transistor;
a source terminal of the eighth field effect transistor is connected to the wired interface, a drain terminal of the eighth field effect transistor is connected to a drain terminal of the ninth field effect transistor, a source terminal of the ninth field effect transistor is connected to the first charging unit, and the first charging unit is further connected to a control terminal of the eighth field effect transistor and a control terminal of the ninth field effect transistor; and
when the electronic device simultaneously performs wired reverse charging and wireless charging, the eighth field effect transistor and the ninth field effect transistor are both in an on state.

14. The electronic device according to any one of claims 1 to 13, further comprising a battery unit, wherein the battery unit comprises a first battery, and the first battery is respectively connected to the first charging unit and the second charging unit; or
the battery unit comprises a second battery and a third battery, the second battery is respectively connected to the first charging unit and the second charging unit, and the third battery is respectively connected to the first charging unit and the second charging unit.

15. A control method, applied to the electronic device according to any one of claims 1 to 14, the method comprising:
controlling the first switch unit to be in an off state when the electronic device simultaneously performs wired reverse charging and wireless charging, wherein no path exists between the wired interface and the coil unit, the electronic device performs the wired charging through the wired interface and the first charging unit, and the electronic device performs the wireless reverse charging through the second charging unit and the coil unit.

16. The method according to claim 15, further comprising:
controlling the first switch unit to be in an off state when the electronic device communicates with a wired external device and performs wireless charging, wherein no path exists between the wired interface and the coil unit, and the electronic device performs the wireless charging through the coil unit and the second charging unit.

17. The method according to claim 15 or 16, further comprising: controlling the first switch unit to be in an off state when the electronic device simultaneously performs wired charging and wireless reverse charging, wherein no path exists between the wired interface and the coil unit, the electronic device performs the wired charging through the wired interface and the first charging unit, and the electronic device performs the wireless reverse charging through the second charging unit and the coil unit.

18. The method according to any one of claims 15 to 17, further comprising: controlling the first switch unit to be in an on state when the electronic device performs wired charging but does not perform wireless charging or wireless reverse charging, wherein no path exists between the wired interface and the coil unit, and the electronic device performs the wired charging through the first charging unit and the second charging unit.

19. An electronic device, comprising a processor and a memory, wherein
the memory is configured to store computer-executable instructions; and
the processor is configured to execute the computer-executable instructions stored in the memory, to cause the electronic device to perform the method according to any one of claims 15 to 18.

20. A computer-readable storage medium, storing a computer program, wherein the computer program, when executed by a processor, implements the method according to any one of claims 15 to 18.
